# EUROPÄISCHE PATENTSCHRIFT

(11) **EP 1 177 117 B1**
(45) Veröffentlichungstag und Bekanntmachung des Hinweises auf die Patenterteilung: **03.12.2003**
(21) Anmeldenummer: 00929010.7
(22) Anmeldetag: 05.05.2000
(51) Int. Cl.: B60R 21/20

(54) **VERKLEIDUNG FÜR SÄULEN VON KRAFTFAHRZEUGEN**
LINING FOR COLUMNS OF AUTOMOBILES
REVETEMENT POUR DES MONTANTS DE VEHICULES AUTOMOBILES

(30) Priorität: 06.05.1999 AT 81799
(43) Veröffentlichungstag der Anmeldung: 06.02.2002
(73) Patentinhaber: Intier Automotive Eybl GmbH, 2435 Ebergassing (AT)
(72) Erfinder: WALTER, Peter, A-7062 St. Margarethen (AT); HAHNEKAMP, Richard, A-7000 Eisenstadt (AT); STEINER, Karl, A-2435 Ebergassing (AT)
(74) Vertreter: Vinazzer, Edith, Dipl.-Ing.
(86) Internationale Anmeldenummer: AT0000123
(87) Internationale Veröffentlichungsnummer: WO00068041

(56) Entgegenhaltungen:
- EP-A- 0 857 624
- EP-A- 0 872 390
- EP-A- 0 894 679

## Beschreibung

Die Erfindung betrifft eine Verkleidung für Säulen von Kraftfahrzeugen mit einem Basisbereich mit Befestigungs- und Halteelementen und mit zumindest einem, beispielsweise einen Airbag abdeckenden Öffnungsbereich, welcher ein an den Basisbereich angrenzendes Scharnier umfasst, wobei im Basisbereich ein thermoplastisches Material einer Shore-A-Härte größer als 100 und im Öffnungsbereich ein thermoplastisches Material geringerer Härte verwendet ist. Eine derartige Verkleidung ist aus der EP-A-0 894 679 bekannt.

Bei vielen Kraftfahrzeugen neuerer Bauart ist es üblich, neben den Airbags, welche in der Lenkradabdeckung oder im Armaturenbrett auf der Beifahrerseite angeordnet sind, ergänzend auch so genannte Seitenairbags vorzusehen, welche in der Seitenverkleidung des Kraftfahrzeuges integriert sein können. Beispielsweise werden derartige Seitenairbags in der Säulenverkleidung der Kraftfahrzeuge untergebracht.

In diesem Zusammenhang ist aus der EP-A-0 894 679 eine Säulenverkleidung für Säulen von Kraftfahrzeugen bekannt geworden, welche aus mindestens einem Öffnungsbereich und mindestens einem Befestigungsbereich besteht.

Der Befestigungsbereich besteht dabei aus einem relativ harten thermoplastischen Kunststoff aus der Gruppe Polypropylen, Acryl-Butadien-Styrol-Copolymer oder Acryl-Butadien-Styrol- Polycarbonat-Copolymer mit einer Shore-A-Härte größer 100. Hingegen besteht der gesamte Öffnungsbereich aus einem weicheren thermoplastischen Kunststoff mit einer bevorzugten Shore-A-Härte von 60 bis 80. Durch die Verwendung von zwei thermoplastischen Kunststoffen unterschiedlicher Härte wird ein Splittern der Säulenverkleidung beim Auslösen bzw. Austreten des Airbags weitgehend vermieden.

Ein Nachteil besteht lediglich darin, dass insbesondere die Säulenverkleidungen in Kraftfahrzeugen hohen Temperaturbelastungen bzw. großen Temperaturschwankungen ausgesetzt sind, und der aus einem weicheren thermoplastischen Material bestehende Öffnungsbereich den strengen Anforderungen hinsichtlich Formstabilität nicht genügen kann.

Aus der EP-A-0 872 390 ist eine Vielzahl von Ausführungsformen für Säulenverkleidungen von Kraftfahrzeugen bekannt. Diese Druckschrift enthält sowohl Varianten für Säulenverkleidungen aus einem einheitlich harten Kunststoffmaterial als auch Varianten aus unterschiedlich harten Materialien für den Öffnungs- und den Basisbereich, wobei im Öffnungsbereich das weichere Material eingesetzt ist. Besteht die Verkleidung aus einem einheitlichen Material wird das Scharnier für den Öffnungsbereich durch Materialschwächungen, beispielsweise in Form von Schlitzen oder Materialverjüngungen, gebildet. Bei jener Ausführung bei der ein harter Basisbereich und ein weicher Öffnungsbereich vorgesehen ist, soll die Verbindungsstelle zwischen den beiden Materialien als Scharnier wirken. Die einheitlich aus einem harten Material bestehenden Vermeidungen sind in Folge der mitzuformenden Materialschwächungen schwierig herstellbar. Darüber hinaus neigen solcher Verkleidungen gerade im Scharnier beim Auslösen des Airbags zu Brüchen. Ausführungen mit einem Öffnungsbereich aus weicherem Material haben den bereits erwähnten Nachteil, eine zu geringe Formstabilität aufzuweisen.

Aufgabe der Erfindung ist es, eine Säulenverkleidung der eingangs genannten Art derart zu verbessern, dass mit einfachen Mitteln eine ausreichende Formstabilität gewährleistet ist.

Diese Aufgabe wird erfindungsgemäß dadurch gelöst, dass der Öffnungsbereich, mit Ausnahme eines Scharnierbereiches, welcher aus einem thermoplastischen Material mit einer Shore-A-Härte kleiner 95 besteht, auch aus dem thermoplastischen Material mit der höheren Shore-A-Härte bestehen.

Erfindungsgemäß kann somit ein großer Teil des Öffnungsbereiches aus dem selben thermoplastischen Material wie der Basisbereich bestehen und in einem Arbeitsgang mit diesem hergestellt werden. Lediglich ein in den Basisbereich integrierter Schamierbereich des Öffnungsbereiches besteht aus einem weicheren thermoplastischen Material mit einer Shore-A-Härte kleiner 95. Da der Großteil des Öffnungsbereiches aus dem härteren Material besteht, kann eine ausreichende Formstabilität des Verkleidungsteiles erzielt werden.

Falls der Schamierbereich nicht bis an den Rand des jeweiligen Verkleidungsteiles reicht, kann der Öffnungsbereich erfindungsgemäß durch an den Schamierbereich anschließende Sollbruchlinien, Wanddickenreduzierungen, etc. begrenzt sein.

Ein optisch einwandfreies Erscheinungsbild ist dadurch gewährleistet, dass der Basisbereich und der Öffnungsbereich samt dem Scharnierbereich von einer einheitlichen Dekorschicht bedeckt sind.

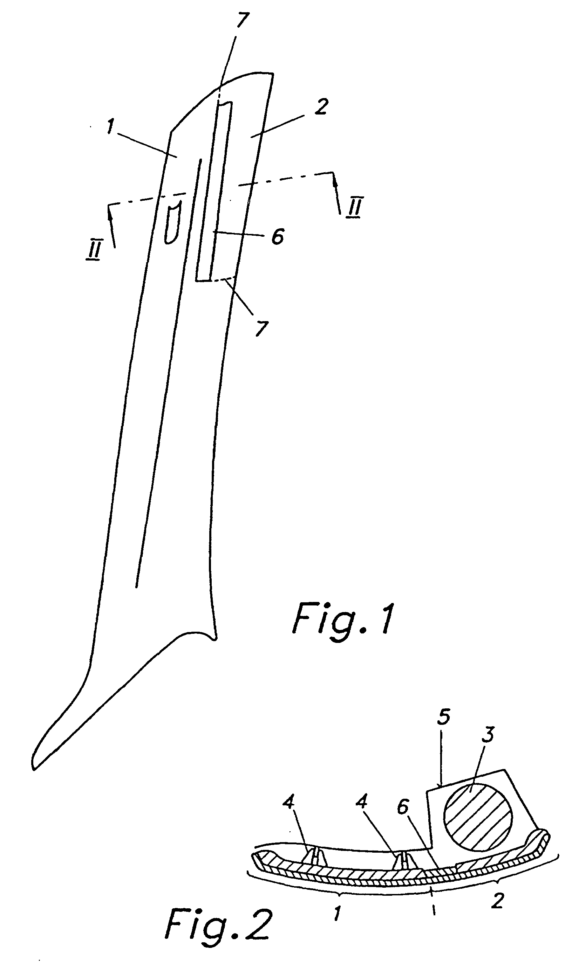

Die Erfindung wird im Folgenden anhand von Zeichnungen näher erläutert. Es zeigen Fig. 1 eine erfindungsgemäße Verkleidung für Säulen von Kraftfahrzeugen in einer Draufsicht sowie Fig. 2 einen Schnitt entlang der Linie II-II in Fig. 1 in vergrößerter Darstellung.

Die in den Fig. 1 und 2 dargestellte Säulenverkleidung weist einen Basisbereich 1 und einen Öffnungsbereich 2 auf, wobei der Öffnungsbereich 2 beispielsweise einen Airbag 3 abdeckt. Wie aus der Fig. 2 ersichtlich, weist der Basisbereich 1 Befestigungs- und Halteelemente 4 auf, mit weichen der Verkleidungsteil an der Säule 5 des Kraftfahrzeuges befestigt werden kann. Der Öffnungsbereich 2 besteht großteils aus einem thermoplastischen Material mit einer Shore-A-Härte größer 100, lediglich ein Schamierbereich 6 angrenzend an den Basisbereich 1 besteht aus einem weicheren thermoplastischen Material mit einer Shore-A-Häre kleiner 90.

Der Schamierbereich 6 kann bis an den äußeren Rand des Verkleidungsteiles reichen, oder wie in der Fig. 1 dargestellt, an den Schamierbereich 6 anschließende Sollbruchlinien bzw. Wanddickenreduzierungen 7 aufweisen.

Vorteilhafterweise besteht der Scharnierbereich aus einem thermoplastischen Material mit einer Shore-A-Härte zwischen 30 und 95, vorzugsweise mit einer Shore-A-Härte zwischen 60 und 80.

Als Materialien für den Basisbereich 1 eignen sich insbesondere Thermoplaste aus der Gruppe Polypropylen, ABS bzw. ABS-Polycorbonat-Blends.

Als Materialien für den Scharnierbereich 6 eignen sich insbesondere thermoplastische Elastomere bzw. Elastomerlegierungen aus Thermoplasten und Elastomeren.

Vorzugsweise können der Basisbereich 1 und der Öffnungsbereich 2 samt Scharnierbereieh 6 von einer einheitlichen Dekorschicht bedeckt sein.

## Patentansprüche

1. Verkleidung für Säulen von Kraftfahrzeugen mit einem Basisbereich (1) mit Befestigungs- und Halteelementen (4) und zumindest einem, beispielsweise einen Airbag (3) abdeckenden Öffnungsbereich (2), welcher ein an den Basisbereich angrenzendes Scharnier umfasst, wobei der Basisbereich (1) aus einem thermoplastischen Material mit einer Shore-A-Härte größer als 100 besteht, **dadurch gekennzeichnet, dass** der Öffnungsbereich (2), mit Ausnahme eines Schamierbereiches (6), weicher aus einem thermoplastischen Material mit einer Shore-A-Härte kleiner 95 besteht, auch aus dem thermoplastischen Material mit der höheren Shore-A-Härte besteht.

2. Verkleidung nach Anspruch 1, **dadurch gekennzeichnet, dass** der Öffnungsbereich (2) weiters durch an den Scharnierbereich (6) anschließende Sollbruchlinien, Wanddickenreduzierungen (7), etc. begrenzt ist.

3. Verkleidung nach Anspruch 1 oder 2, **dadurch gekennzeichnet, dass** der Scharnierbereich (6) aus einem thermoplastischen Material mit einer Shore-A-Härte zwischen 30 und 95, vorzugsweise zwischen 60 und 80 besteht.

4. Verkleidung nach einem der. Ansprüche 1 bis 3, **dadurch gekennzeichnet, dass** der Basisbereich (1) und der Öffnungsbereich (2) samt dem Scharnierbereich (6) von einer einheitlichen Dekorschicht (8) bedeckt sind.

## Claims

1. A trim for pillars of motor vehicles with a base area (1) with fixing and holding elements (4) and at least one opening area (2) covering for example an airbag (3), which opening area includes a hinge adjacent to the base area, whereby the base area (1) is made of a thermoplastic material with a Shore A hardness greater than 100, **characterised in that** the opening area (2), with the exception of a hinge area (6), which is made of a thermoplastic material with a Shore A hardness of less than 95, is also made of a thermoplastic material with a higher Shore A hardness.

2. The trim according to claim 1, **characterised in that** the opening area (2) is also bordered by predetermined breaking lines, wall thickness reductions (7), etc. adjacent to the hinge area (6) .

3. The trim according to claim 1 or 2, **characterised in that** the hinge area (6) is made of a thermoplastic material with a Shore A hardness between 30 and 95, preferably between 60 and 80.

4. The trim according to any one of claims 1 to 3, **characterised in that** the base area (1) and the opening area (2) together with the hinge area (6) are covered by a uniform decorative layer (8).

## Revendications

1. Habillage pour colonnes de véhicules automobiles comportant une zone de base (1) à éléments de fixation et de maintien (4) et au moins une zone d'ouverture (2) recouvrant par exemple un airbag (3), qui comprend une charnière contiguë à la zone de base, la zone de base (1) consistant en un matériau thermoplastique d'une dureté shore A supérieure à 100, **caractérisé en ce que** la zone d'ouverture (2), à l'exception d'une zone de charnière (6) consistant en un matériau thermoplastique à dureté shore A inférieure à 95, est également composée du matériau thermoplastique à dureté shore A supérieure.

2. Habillage selon la revendication 1, **caractérisé en ce que** la zone d'ouverture (2) est de plus limitée par des lignes de rupture théorique, des réductions d'épaisseur des parois (7) etc. adjacentes à la zone de charnière (6).

3. Habillage selon la revendication 1 ou 2, **caractérisé en ce que** la zone de charnière (6) consiste en un matériau thermoplastique d'une dureté shore A située entre 30 et 95, de préférence entre 60 et 80.

4. Habillage selon l'une quelconque des revendications 1 à 3, **caractérisé en ce que** la zone de base (1) et la zone d'ouverture (2), y compris la zone de charnière (6) sont recouvertes par une couche décor uniforme (8).
